(19) Europäisches Patentamt
European Patent Office
Office européen des brevets

(11) **EP 2 762 394 B1**

(12) **EUROPEAN PATENT SPECIFICATION**

(45) Date of publication and mention
of the grant of the patent:
**11.03.2015 Bulletin 2015/11**

(51) Int Cl.:
***B62J 99/00*** *(2009.01)*     ***G01P 3/80*** *(2006.01)*

(21) Application number: **14153098.0**

(22) Date of filing: **29.01.2014**

(54) **Motorcycle**

Motorrad

Motocyclette

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2013 JP 2013017645**

(43) Date of publication of application:
**06.08.2014 Bulletin 2014/32**

(73) Proprietor: **Honda Motor Co., Ltd.
Tokyo 107-8556 (JP)**

(72) Inventors:
• **Ono, Tetsuya
Wako-shi, Saitama 351-0193 (JP)**
• **Nishimura, Masatsugu
Wako-shi, Saitama 351-0193 (JP)**

(74) Representative: **Stevens, Jason Paul
Dehns
St Bride's House
10 Salisbury Square
London
EC4Y 8JD (GB)**

(56) References cited:
**JP-A- H0 798 225     JP-A- H07 132 869
JP-A- 2004 306 752**

EP 2 762 394 B1

**Description**

The present invention relates to a motorcycle equipped with means for capturing an image of a road surface.

Japanese Patent Laid-Open No. 2007-278951 discloses a technique for capturing an image of a road surface with a camera attached to a vehicle and measuring the traveling speed and angle of the road surface relative to the camera, so as to use them as vehicle speed and posture information and keep track of the road surface conditions.

If a camera is attached to a four-wheeled motor vehicle as in Japanese Patent Laid-Open No. 2007-278951, ample vibration-damping members can be provided between a prime mover such as engine and a vehicle body frame, as there is a comparatively large amount of space in a four-wheeled motor vehicle for arranging parts. This ensures ease in installing the camera where it is less likely to be exposed to vibration caused, for example, by the engine, thus providing sharp images.

In a motorcycle, in contrast, an engine and other parts are provided between the front and rear wheels. This makes the task of securing a camera installation space extremely difficult to achieve. Besides, the engine vibration is larger than in a four-wheeled motor vehicle. Moreover, it is not possible to provide ample vibration-damping members between the prime mover (the engine) and the vehicle body frame. Therefore, a proper arrangement of a camera is desired, to allow sharp road surface images to be captured without increasing the size of the vehicle body.

JP 2004-306752 discloses a motorcycle including: a prime mover having a main shaft; a front wheel located forwardly of the prime mover; a rear wheel located rearwardly of the prime mover; a pivot shaft provided on the prime mover or on a vehicle body frame connected to the prime mover at a position rearwardly of the main shaft; and a swing arm that is supported by the pivot shaft so as to be vertically swingable, the swing arm pivotally supporting the rear wheel at its rear portion; the motorcycle further comprising: imaging means adapted to capture images of a road surface; the imaging means being arranged below the prime mover or the swing arm and rearwardly of the centre of the main shaft; the imaging means being fastened to and supported by at least either a lower portion of the prime mover or a lower portion of the vehicle body frame connected to the prime mover.

Other motorcycles with inclination sensors are disclosed in JP 7-98225 and JP 7-132869.

In light of the foregoing, it is an object of at least the preferred embodiment of the present invention to provide a motorcycle having a camera attached thereto in such a manner as to capture sharper images.

According to a first aspect of the present invention, there is provided a motorcycle including: a prime mover serving as a driving source of the motorcycle and having a main shaft; a front wheel located forwardly of the prime mover; a rear wheel located rearwardly of the prime mover; a pivot shaft provided on the prime mover or on a vehicle body frame connected to the prime mover at a position rearwardly of the main shaft; and a swing arm that is supported by the pivot shaft so as to be vertically swingable, the swing arm pivotally supporting the rear wheel at its rear portion; the motorcycle further comprising: imaging means adapted to capture images of a road surface; the imaging means being arranged below the prime mover or the swing arm, forwardly of the pivot shaft, and rearwardly of the centre of the main shaft; the imaging means being fastened to and supported by at least either a lower portion of the prime mover or a lower portion of the vehicle body frame connected to the prime mover.

The imaging means is provided below a prime mover or swing arm, thus making it possible to arrange the imaging means where there is only a small number of parts that might present an obstacle to capturing an image of a road surface. Further, the imaging means is supported by a prime mover or a vehicle body frame connected to the prime mover, and arranged rearwardly of the centre of a main shaft that primarily generates vibration. This allows the imaging means to be located where it is not likely to be affected by vibration, and ensures ease in capturing sharper images.

Further, the imaging means is provided forwardly of the pivot shaft. This makes it possible to arrange the imaging means without interference with a vertically vibrating swing arm.

Preferably, the imaging means is housed in an under cowl adapted to cover a lower portion of the prime mover, and an opening is formed in the under cowl at a position appropriate to an optical axis of the imaging means.

Since the imaging means is housed in an under cowl, this reduces air resistance, and protects the imaging means from water, dust and other contaminants. It also provides improved appearance.

Preferably, the imaging means is set to have a view angle that ensures that no scene above the horizon is present in the captured images even when the motorcycle banks fully. This prevents anything other than the road surface from appearing in the captured images.

Preferably, the imaging means is set to have a view angle that is large enough to include contact points of the rear wheel with the road at the time of maximum banking of the motorcycle as seen from the front of the motorcycle.

With this arrangement, it is possible to capture an image of the road surface on which the rear wheel will probably run at all times irrespective of a bank angle.

In a preferred form, the prime mover is an engine adapted to rotate a crankshaft serving as the main shaft, and includes, below the crankshaft, an oil pan formed so as to project downwardly of the crankshaft, and the imaging means is arranged in a concave portion that is provided rearwardly of the oil pan.

With this arrangement, it is possible to secure a capacity of the oil pan and a space for arranging the imaging means.

A preferred embodiment of the invention will now be described by way of example only and with reference to the accompanying drawings, in which:

FIG. 1 is a side view of a motorcycle to which imaging means are mounted;
FIG. 2 is a front view of the motorcycle shown in FIG. 1;
FIG. 3 is a diagram showing the camera attachment structure as seen from the left of a power unit;
FIG. 4 is a diagram showing the camera attachment structure as seen from the bottom of the power unit;
FIG. 5 is a cross-sectional view taken along line V-V in FIG. 3;
FIG. 6 is an enlarged view of certain parts shown in FIG. 2;
FIG. 7 is a functional block diagram of a vehicle speed calculator;
FIG. 8 is a diagram showing an image captured by a camera;
FIG. 9 is a diagram showing the camera, the reference distance mark irradiation means, and the second mark irradiation means as seen from the left of the motorcycle; and
FIG. 10 is a diagram showing the camera, the reference distance mark irradiation means, and the second mark irradiation means as seen from the front of the motorcycle.

A detailed description will be given below of a preferred embodiment of a motorcycle according to the present invention with reference to the accompanying drawings.

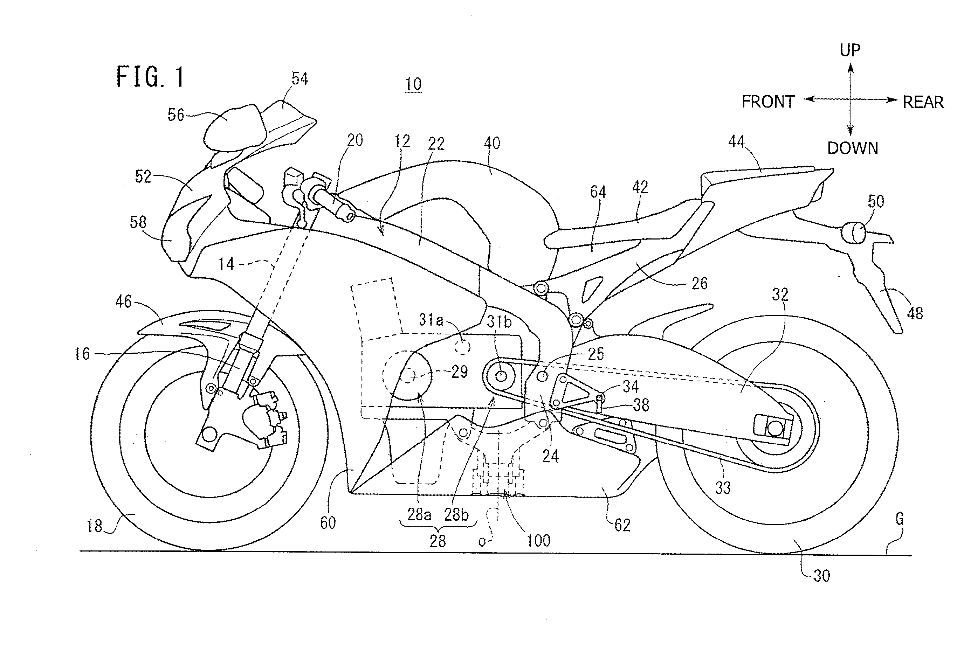

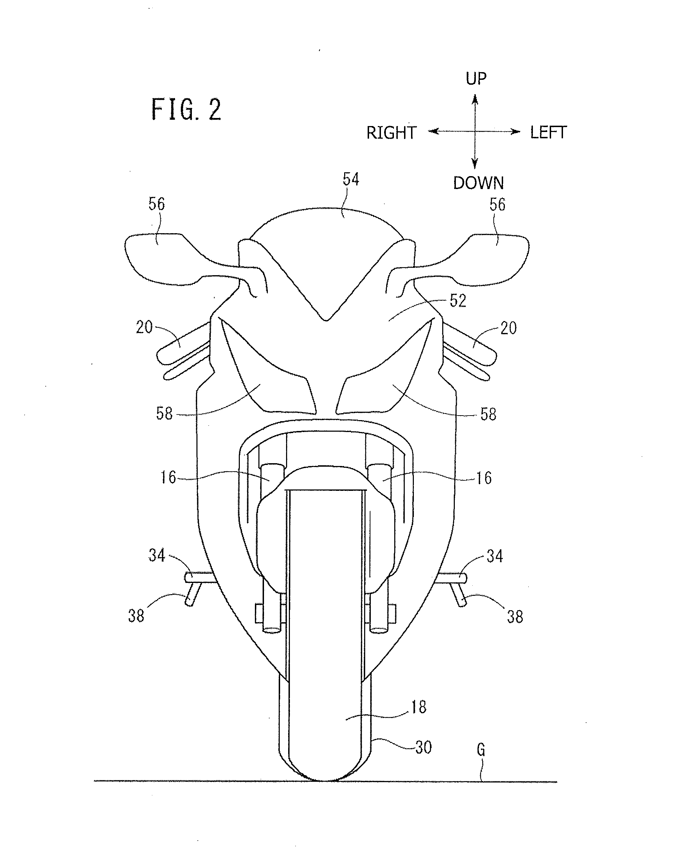

FIG. 1 is a side view of a motorcycle 10 to which an imaging means is mounted, and FIG. 2 is a front view of the motorcycle 10 shown in FIG. 1. It should be noted that, unless otherwise specified, directions such as up, down, front, rear, left and right are to be interpreted in accordance with the directions of the arrows shown in FIGS. 1 and 2.

The motorcycle 10 has a body frame 12, a head pipe 14, a pair of left and right front forks 16, a front wheel 18, and a steerable handlebar 20. The head pipe 14 is provided on the front of the vehicle body frame 12. The left and right front forks 16 are pivotally supported by the head pipe 14. The front wheel 18 is a steerable wheel pivotally supported by the left and right front forks 16. The handlebar 20 is attached to the upper portion of the left and right front forks 16.

The body frame 12 includes a pair of left and right main frames 22, a pair of left and right pivot plates 24, and a pair of left and right seat frames 26. The left and right main frames 22 extend rearwardly from the head pipe 14. The left and right pivot plates 24 are provided on the rear side of the left and right main frames 22. The left and right seat frames 26 are provided on the left and right pivot plates 24 and extend rearwardly and diagonally upwardly. A power unit 28 is provided on the left and right main frames 22 to produce power. A swing arm 32 that pivotally supports a driven rear wheel 30 at its rear portion is supported in a vertically swingable manner by a swing arm pivot shaft 25 of the pivot plates 24. The power unit 28 houses a prime mover in the form of an engine 28a and a transmission 28b inside its casing. It should be noted that the swing arm pivot shaft 25 may be provided on the engine 28a or power unit 28.

The driving force of a crankshaft 29, the main shaft of the engine 28a, is first transferred to a main shaft 31 a of the transmission 28b, then output from a counter shaft 31 b. The driving force output from the counter shaft 31 b is transferred to the rear wheel 30 via a chain 33.

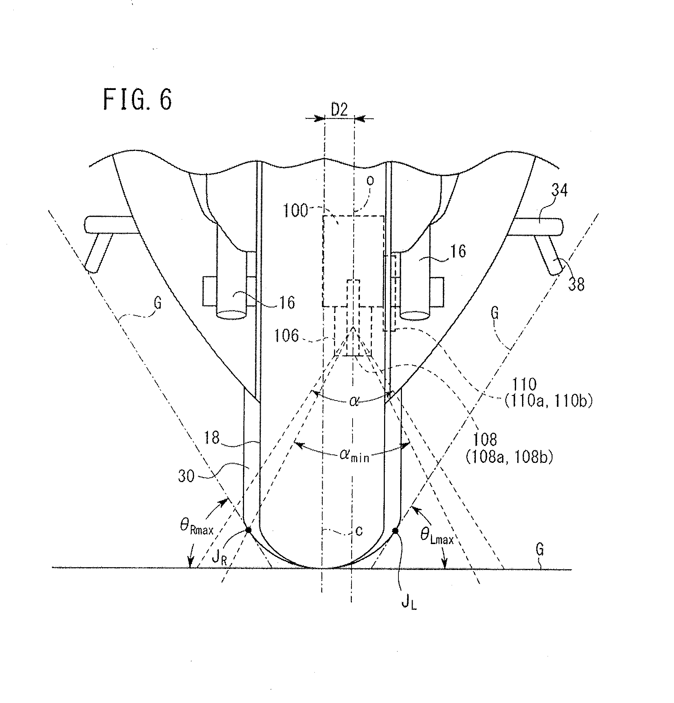

A pair of left and right steps 34 are attached, one to each of the pivot plates 24, so that a driver can place his or her feet on the steps 34. A bank sensor 38 is provided on each of the steps 34 to specify a maximum bank angle $\theta_{max}$ of the motorcycle 10. As shown in FIG. 6, when the motorcycle 10 banks to the maximum bank angle $\theta_{max}$, one of the bank sensors 38 comes into contact with a road surface G, restricting a bank angle $\theta$ from increasing further. It should be noted that the maximum bank angle on the left side of the motorcycle 10 is denoted by $\theta_{Lmax}$, and that on the right side thereof by $\theta_{Rmax}$. The maximum bank angles $\theta_{Lmax}$ and $\theta_{Rmax}$ will be collectively referred to as the maximum bank angle $\theta_{max}$.

A fuel tank 40 for storing fuel is provided above the left and right main frames 22. A driver's seat 42 on which the driver can be seated is provided rearwardly of the fuel tank 40 and above the left and right seat frames 26. A pillion seat 44 on which a pillion passenger can be seated is provided rearwardly of the driver's seat 42. A front fender 46 is provided on the left and right front forks 16. A rear fender 48 is provided on the rear portion of the left and right seat frames 26, and supports a rear turn indicator 50.

The motorcycle 10 includes an upper cowl 52, a windscreen 54, a rear view mirror 56, a headlight 58, a middle cowl 60, an under cowl 62, and a side cover 64. The upper cowl 52 is provided on the body frame 12 to protect the front side of the motorcycle 10. The windscreen 54 is provided above the upper cowl 52. The rear view mirror 56 is provided on the upper portion of the upper cowl 52 to allow the driver to check what is behind the motorcycle. The headlight 58 is provided on the front portion of the upper cowl 52 to shine light forward. The middle cowl 60 protects the front lateral sides of the motorcycle 10. The under cowl 62 is provided on the lower portion of the middle cowl 60 and extends rearwardly therefrom. The side cover 64 is provided above the seat frames 26 to cover areas from the upper portion of the seat frames 26 to the lower portion of the driver's seat 42. A front turn indicator is built into the rear view mirror 56.

A camera 100 is provided below the power unit 28 to capture images of the road surface G from below the power unit 28. A description will now be given of an attachment structure of the camera (imaging means) 100 mounted on the motorcycle 10.

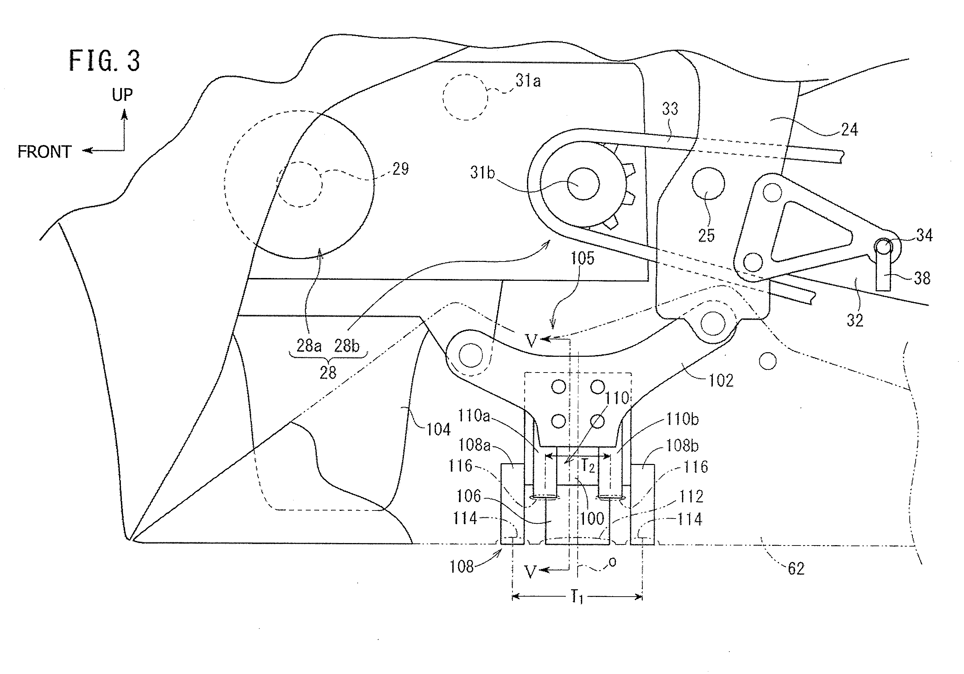

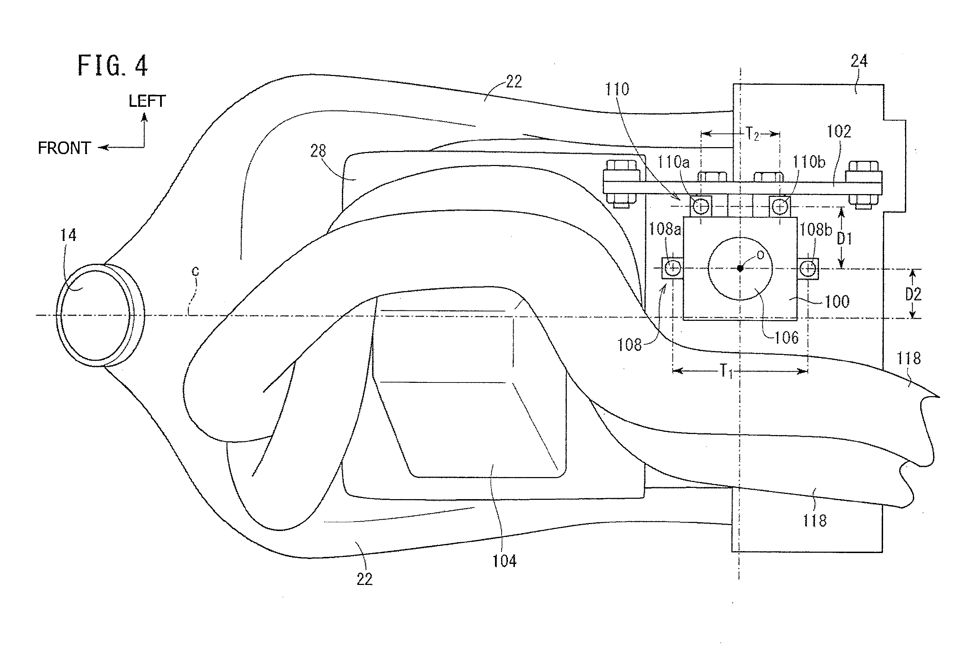

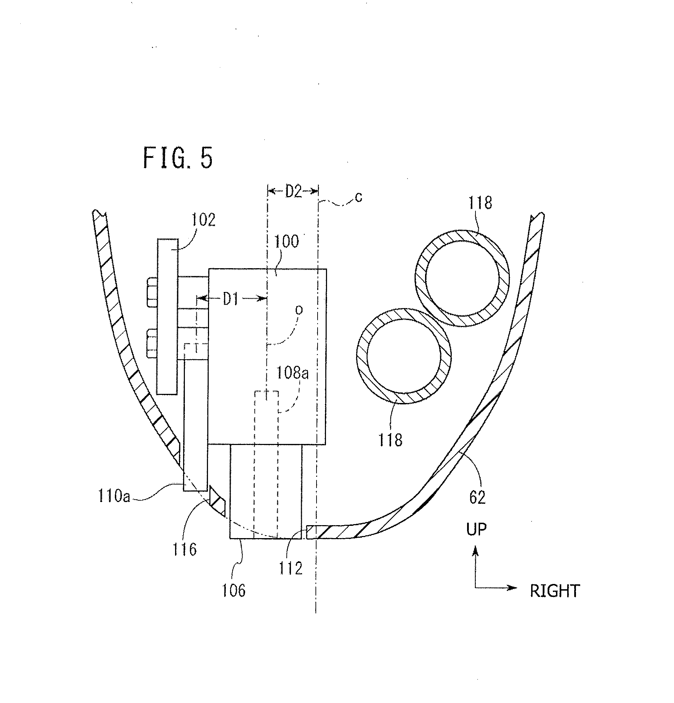

FIG. 3 is a diagram showing the attachment structure of the camera 100 as seen from the left of the power unit 28. FIG. 4 is a diagram showing the attachment structure of the camera 100 as seen from the bottom of the power unit 28. FIG. 5 is a cross- sectional view taken along line V-V in FIG. 3. It should be noted that the unnecessary parts are not shown for simplification of the description.

As shown in FIG. 3, the camera 100 is located below the power unit 28 (engine 28a), and rearwardly of the centre of the crankshaft 29 and forwardly of the swing arm pivot shaft 25. The camera 100 is also fastened to and supported by the lower portions of the power unit 28 (engine 28a) and the pivot plates 24. More specifically, the camera 100 is attached to a stay 102 that is suspended from the lower portions of the power unit 28 and the pivot plates 24. It should be noted that the camera 100 need only be fastened to and supported by one of the lower portion of the power unit 28 or the lower portion of the pivot plates 24. The camera 100 may be provided below the swing arm 32.

The engine 28a includes an oil pan 104 formed below the crankshaft 29 in such a manner as to protrude downwardly. The camera 100 and the stay 102 are provided in a concave portion 105 that is located to the rear of the oil pan 104. The concave portion 105 is formed with the downwardly protruding oil pan 104.

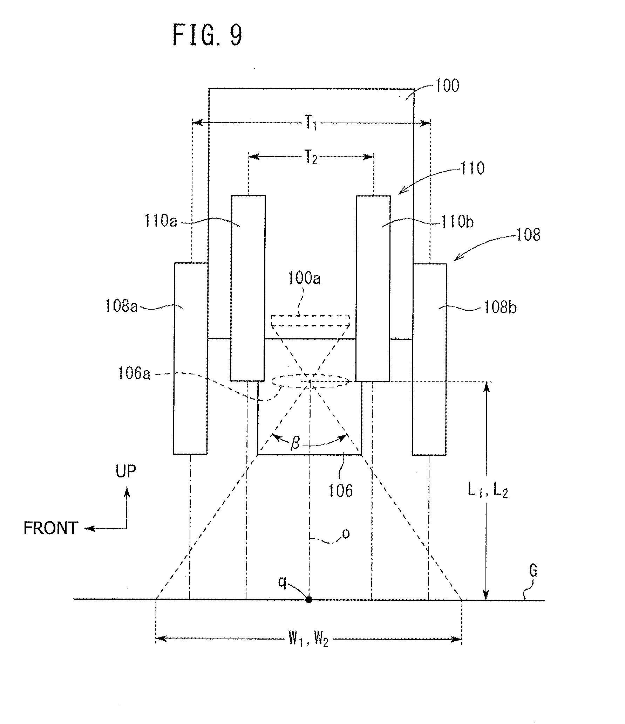

A lens barrel 106 is attached at the centre of the lower portion of the camera 100. The lens barrel 106 has a lens 106a (see FIG. 9) adapted to form an image of a subject on an imaging element 100a (see FIG. 9). The optical axis of the lens 106a serves as an optical axis o of the camera 100. It is preferred that the optical axis o of the camera 100 should be arranged so as to be approximately vertical relative to the flat road surface G when the motorcycle 10 is upright on the road surface G. Reference distance mark irradiation means 108 and second mark irradiation means 110 are attached to the camera 100.

The reference distance mark irradiation means 108 irradiates a reference distance mark onto the road surface G in parallel with the optical axis o of the camera 100 (in parallel therewith as seen from the side and front). The reference distance mark is formed in such a manner as to have a longitudinal reference distance $T_1$ (e.g., 90 mm). The reference distance mark irradiation means 108 is attached in front of and behind the camera 100 in such a manner as to irradiate the reference distance mark in the field of view of the camera 100.

The reference distance mark irradiation means 108 has two laser pointers 108a and 108b that are arranged one behind the other in the longitudinal direction. The laser pointers 108a and 108b emit laser beams. The laser pointers 108a and 108b are provided, one at the front and the other at the rear, relative to the optical axis o of the camera 100, in such a manner that their axial lines (optical axes) are aligned in the longitudinal direction.

In the present embodiment, the optical axis o of the camera 100 is located on a line connecting the axial lines of the two laser pointers 108a and 108b. That is, the two laser pointers 108a and 108b are arranged in such a manner that their axial lines are also aligned with the optical axis o of the camera 100 in the longitudinal direction (see FIG. 4). The two laser pointers 108a and 108b are arranged at the reference distance $T_1$ from each other in the longitudinal direction. This allows them to irradiate two points, i.e., a reference distance mark, onto the road surface G. The two points are formed so that they are separated by the reference distance $T_1$ in the longitudinal direction.

The second mark irradiation means 110 irradiates a second mark onto the road surface G in parallel with the optical axis o of the camera 100 (in parallel therewith as seen from the side and front). The second mark is formed in such a manner as to have a longitudinal given distance $T_2$ (e.g., 70 mm). The second mark irradiation means 110 is attached leftwards of the camera 100 in such a manner as to irradiate the second mark in the field of view of the camera 100.

The second mark irradiation means 110 has two laser pointers 110a and 110b that are arranged one behind the other in the longitudinal direction. The laser pointers 110a and 110b emit laser beams. The laser pointers 110a and 110b are provided, one at the front and the other at the rear, relative to the optical axis o of the camera 100 in such a manner that their axial lines (optical axes) are aligned in the longitudinal direction (see FIG. 4). The second mark irradiation means 110 are arranged to be offset to the left relative to the reference distance mark irradiation means 108 by a distance (offset distance) D1 (e.g., 35 mm). The two laser pointers 110a and 110b are arranged at the given distance $T_2$ from each other in the longitudinal direction. This allows them to irradiate two points (second mark) onto the road surface G. The two points are formed so that they are separated by the given distance $T_2$ in the longitudinal direction.

As shown in FIGS. 3 and 5, the camera 100, the reference distance mark irradiation means 108, and the second mark irradiation means 110 are housed in the under cowl 62 that covers the lower portion of the power unit 28. Openings 112, 114 and 116 are formed in the under cowl 62. The opening 112 is provided to allow an image to be captured, and is located at a position appropriate to the optical axis o of the camera 100. The opening 114 is provided to allow the reference distance mark to be irradiated, and is located at a position appropriate to the optical axis of the reference distance mark irradiation means 108. The opening 116 is provided to allow the second mark to be irradiated, and is located at a position appropriate to the optical axis of the second mark irradiation means 110. Thanks to the openings 112, 114 and 116, the under cowl 62 does not interfere with image capture by the camera 100 or irradiation by the reference distance mark irradiation means 108 and the second mark irradiation means 110. Although provided independently of each other, the openings 112, 114 and 116 may be connected to each other.

As shown in FIG. 4, the camera 100 is arranged such that the optical axis o thereof is offset to the left from a lateral centreline c of the vehicle by a distance (offset distance) D2 (e.g., 35 mm). The second mark irradiation means 110 is arranged to the left of the camera 100. The smaller the offset distance D2 is, the closer the optical axis o of the camera 100 is to the lateral centreline c. Therefore, the smaller the offset distance D2 the better, with an offset distance of zero being best. However, as shown in FIG. 4, the oil pan 104 is provided slightly to the right of the power unit 28. The exhaust pipe 118 adapted to emit exhaust gas of the engine 28a is arranged so as to extend on the left side of the oil pan 104, then bend to the right and extend on the right side of the camera 100. As described above, the second mark irradiation means 110 is attached on the side of the camera 100 away from the exhaust pipe 118. This makes it possible to bring the optical axis o of the camera 100 close to the lateral centre of the vehicle. It should be noted that the exhaust pipe 118 is also located within the under cowl 62, as shown in FIG. 5.

A description will now be given of the view angle of the camera 100. FIG. 6 is an enlarged view of some of the parts shown in FIG. 2. It is preferred that a view angle $\alpha$ of the camera 100 along the vehicle width (hereinafter the vehicle width view angle) should be set to fall within the range of $\alpha_{min} \leq \alpha \leq \alpha_{max}$. $\alpha_{min}$ is the angle at which contact points $J_L$ and $J_R$ of the rear wheel 30 with the road surface G, when the motorcycle 10 is banked to the maximum bank angle $\theta_{max}$, fit into the view angle of the camera 100 as seen from the front of the vehicle. $\alpha_{max}$ is the angle expressed by $\alpha_{max} = (90° - \text{max. bank angle } \theta_{max}) \times 2$. If the vehicle width view angle $\alpha$ of the camera 100 is $\alpha_{max}$, one side of the vehicle width view angle $\alpha$ of the camera 100 is approximately parallel with the road surface G when the motorcycle 10 banks to the maximum bank angle $\theta_{max}$, thus causing the camera 100 to image the horizon. Therefore, setting the vehicle width view angle $\alpha$ smaller than the angle $\alpha_{max}$ keeps the field of view at or below the horizon, and ensures that nothing above the horizon is included in the captured image, thus making it possible to capture images of the road surface G.

A description will now be given of why the vehicle width view angle $\alpha$ of the camera 100 is set to be equal to or greater than $\alpha_{min}$ and smaller than $\alpha_{max}$. Considering the verification of the road surface conditions, for example, during imaging of the road surface G below the motorcycle 10 by the camera 100, there is a demand to image, as far as possible, the actual road surface on which the wheels and in particular the rear wheel 30 will run. Further, in the case of the motorcycle 10, tyre contact points vary depending on the bank angle $\theta$. Therefore, it is desirable to ensure that the vehicle width view angle $\alpha$ is large enough to include at least both the rear wheel contact points $J_L$ and $J_R$ at the time of maximum banking to left and right, respectively.

On the other hand, expanding the field of view by unnecessarily increasing the vehicle width view angle $\alpha$ leads to unnecessarily obtaining image information which does not relate to the road surface G, thus resulting in poor efficiency. During banking in particular, the rear wheel contact point moves to one side, left or right. As a result, the centre of the captured image moves away from the contact point with the road surface on which the rear wheel 30 will probably run. As a consequence, the area near the rear wheel contact points $J_L$ and $J_R$, an area of interest, is limited to an extremely small portion of the captured image. Therefore, the smaller the vehicle width view angle $\alpha$ of the camera 100, the better, as long as the rear wheel contact points $J_L$ and $J_R$, at the time of maximum banking fit into the vehicle width view angle $\alpha$ as seen from the front of the vehicle. From this point of view, the vehicle width view angle $\alpha$ of the camera 100 has the relation $\alpha_{min} \leq \alpha < \alpha_{max}$.

Further, in order to secure a necessary field of view while at the same time reducing the view angle of the camera 100 as much as possible, it is necessary to arrange the focal point of the camera 100 as high as possible. In the present embodiment, therefore, the camera 100 is arranged in the concave portion 105 located forwardly of the swing arm pivot shaft 25 and rearwardly of the oil pan 104. This allows the camera 100 to be as high as possible, thus making it possible to meet the above requirement for the vehicle width view angle $\alpha$ of the camera 100.

It should be noted that, as shown in FIG. 6, the optical axis o should preferably be arranged at least within the tyre width of the rear wheel 30. It is preferred that the camera 100, the reference distance mark irradiation means 108, and the second mark irradiation means 110 should be arranged inside the tyre width of the rear wheel 30. Further, it is preferred that at least the camera 100 and the reference distance mark irradiation means 108 should be arranged inside the tyre width of the front wheel 18.

As described above, the camera 100 is arranged below the engine 28a or the swing arm 32, thus making it possible to arrange the camera 100 where there are only a small number of parts that might present an obstacle to imaging the road surface. Further, the camera 100 is supported at least by either the engine 28a or at least one of the pivot plates 24 making up the body frame 12. The camera 100 is arranged rearwardly of the centre of the crankshaft 29 that primarily generates vibration. This allows the camera 100 to be located where it is less likely to be affected by vibration, which ensures ease in capturing sharper images.

The camera 100 is arranged forwardly of the swing arm pivot shaft 25, thus making it possible to arrange the camera 100 with no interference with the vertically vibrating swing arm 32. Further, the camera 100 is arranged in the concave portion 105 located to the rear of the oil pan 104. This makes it possible to secure both a capacity of the oil pan 104 and a space for arranging the camera 100.

The camera 100 is housed in the under cowl 62. This reduces air resistance and protects the camera 100 from water, dust and other contaminants, while also providing an improved appearance. It is more advantageous in reducing air resistance and protecting against dust particularly if the camera 100 and the laser pointers 108a, 108b, 110a and 110b are recessed from the surface of the under cowl 62. Further, the camera 100 is set to have a vehicle width view angle $\alpha$ that ensures that nothing above the horizon is included in the captured image even when the motorcycle 10 banks fully. This prevents, as far as possible, anything other than the road surface G from appearing in the captured image.

The vehicle width view angle $\alpha$ of the camera 100 is set such that the rear wheel contact points $J_L$ and $J_R$ at the time that the motorcycle 10 is fully banked fit into the view angle of the camera 100 as seen from the front. This makes it possible to image the road surface G on which the rear wheel 30 will probably run at all times, irrespective of the bank angle $\theta$.

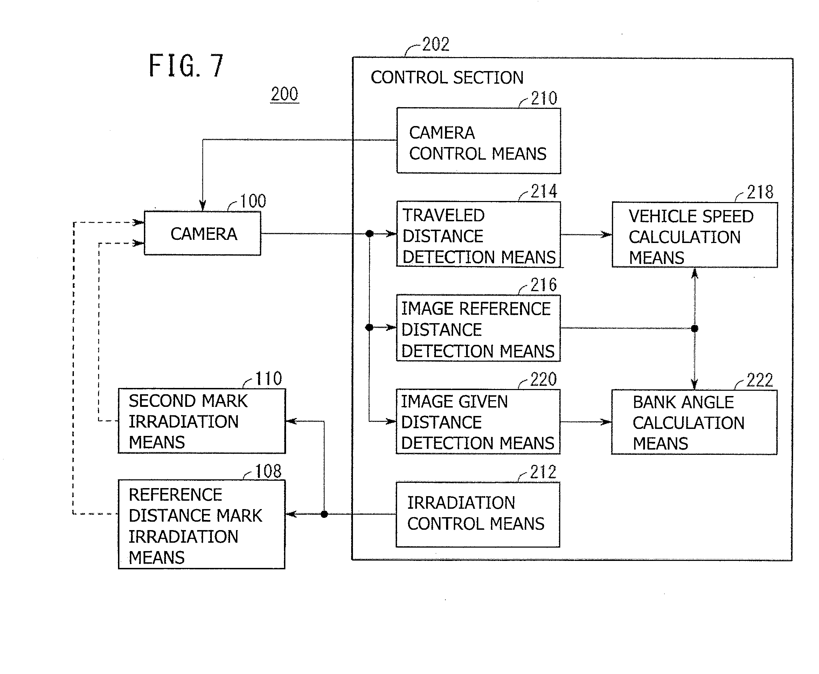

FIG. 7 is a functional block diagram of a vehicle speed calculator 200. The vehicle speed calculator 200 includes the camera 100, the reference distance mark irradiation means 108, the second mark irradiation means 110, and a control section 202. The control section 202 has camera control means 210, irradiation control means 212, travelled distance detection means 214, image reference distance detection means 216, vehicle speed calculation means 218, image given distance detection means 220, and bank angle calculation means 222. The control section 202 is a computer having a CPU, memory and other parts. The control section 202 serves as the control section 202 of the present embodiment by the CPU loading a program from the memory.

The camera control means 210 controls imaging performed by the camera 100. The camera control means 210 controls the camera 100 in such a manner as to image the road surface G at given intervals (for example, a frame rate of 500 frames per second) during driving of the motorcycle 10. The irradiation control means 212 controls irradiation performed by the reference distance mark irradiation means 108 and the second mark irradiation means 110. The irradiation control means 212 controls the reference distance mark irradiation means 108 and the second mark irradiation means 110 in such a manner as to irradiate light onto the road surface G during driving of the motorcycle 10. The irradiation control means 212 may control the reference distance mark irradiation means 108 and the second mark irradiation means 110 so that they emit light during an exposure period of the camera 100 and do not emit light during other periods.

The travelled distance detection means 214 detects the travelled distance x per unit time (e.g., pixels per second) of the feature point p in the field of view as imaged by the camera 100 in the captured image. That is, the travelled distance detection means 214 detects the travelled distance x per unit time of the feature point p by detecting the location of the feature point p, available in a previously captured image, and in the next image (the currently captured image) based on block matching, representative point matching or some other technique.

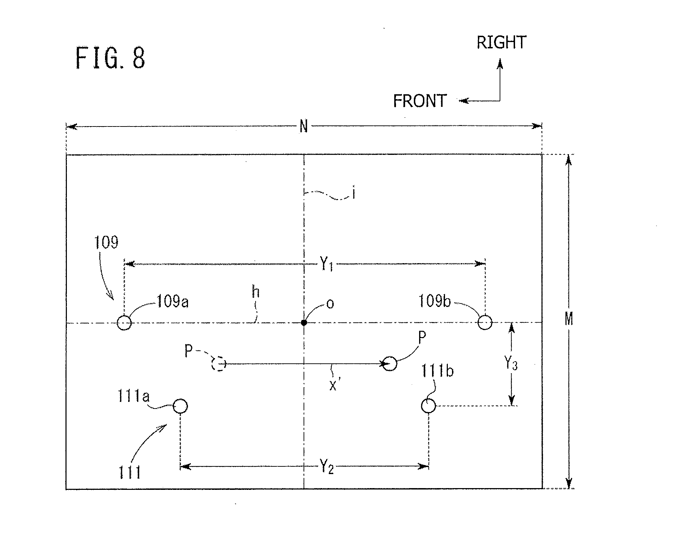

Here, the feature point p is a point extracted from a pattern on the road surface G, shading produced by projections and recesses, and so on. Further, the travelled distance x is strictly the travelled distance x in the captured image. Even if the vehicle speed v (in millimetres per second) is the same, the value of the travelled distance varies depending on the height of the motorcycle 10 (that is, the height of the camera 100 relative to the road surface G). For example, if the vehicle speed v is the same but the vehicle is relatively tall, the travelled distance x is smaller than if the vehicle is relatively short. It should be noted that the captured image shown in FIG. 8 shows the travelled distance x' per 1/500 of a second.

The image reference distance detection means 216 detects an image reference distance $Y_1$ (measured in pixels), which is a longitudinal length of the reference distance mark as irradiated by the reference distance mark irradiation means 108 in the captured image. The longitudinal direction in the captured image is the same as the longitudinal direction of the motorcycle 10. The image reference distance $Y_1$ represents the reference distance $T_1$ in the captured image and so varies depending on the height of the motorcycle 10. For example, if the vehicle speed v is the same but the vehicle is relatively tall, the image reference distance $Y_1$ is smaller than if the vehicle is relatively short. It should be noted that the image reference distance $Y_1$ is shown in the captured image of FIG. 8. It should be noted that reference symbol 109 in FIG. 8 represents a reference distance mark in the captured image. The reference distance mark 109 is made up of points 109a and 109b.

The points 109a and 109b should be located equidistantly from the optical axis o. That is, it is preferred that the laser pointers 108a and 108b should be provided so that they emit light in parallel with the optical axis o at positions equidistant from the optical axis o. The optical axis o is located at the centre of the captured image. It should be noted that straight lines h and i are shown in FIG. 8 for reasons of convenience. The straight line h extends in the longitudinal direction of the captured image from the centre (optical axis o) of the captured image. The straight line i extends in the horizontal direction of the captured image from the centre (optical axis o) of the captured image. The points 109a and 109b of the reference distance mark 109 are located on the straight line h.

The vehicle speed calculation means 218 calculates the vehicle speed v (measured in millimetres per second) from the travelled distance x detected by the travelled distance detection means 214. Here, the travelled distance x varies with a change in the vehicle height, even if the vehicle speed v is the same. The same distance x varies all the more for a motorcycle, whose height is more likely to change as a result of acceleration and deceleration or banking as compared to a four-wheeled vehicle. In order to provide improved accuracy of the vehicle speed v even in the event of a change in the vehicle height, the vehicle speed calculation means 218 calculates the vehicle speed v from the travelled distance x per unit time detected by the travelled distance detection means 214 using the image reference distance $Y_1$ detected by the image reference distance detection means 216 and the reference distance $T_1$ of the reference distance mark 109. More specifically, the vehicle speed v is calculated by using Formula (1) shown below.

[Formula 1]

$$\mathrm{v}\left[\frac{mm}{sec}\right] = \left(x\left[\frac{pixel}{sec}\right] \times T_1[mm]\right)/Y_1[pixel] \qquad \cdots(1)$$

The image given distance detection means 220 detects an image given distance $Y_2$ (measured in pixels), which is a longitudinal length of the second mark irradiated by the second mark irradiation means 110 in the captured image. The image given distance $Y_2$ represents the given distance $T_2$ in the captured image and therefore varies depending on the height of the motorcycle 10 or the bank angle $\theta$. For example, if the vehicle speed v is the same but the vehicle is relatively tall, the image given distance $Y_2$ is smaller than if the vehicle is relatively short. It should be noted that the image given distance $Y_2$ is shown in the captured image of FIG. 8. Further, N in FIG. 8 represents the longitudinal distance (in pixels) of the captured image, and M the horizontal distance (in pixels) of the captured image.

It should be noted that reference symbol 111 in FIG. 8 represents a second mark in the captured image. The second mark 111 is made up of points 111 a and 111 b. The points 111 a and 111 b should preferably be located equidistantly from the optical axis o. That is, it is preferred that the laser pointers 110a and 110b should be arranged so that they emit light in parallel with the optical axis o at the positions equidistant from the optical axis o. Further, although it is normally desirable for N (as shown in FIG. 8) to be as long as possible, N should preferably be set such that neither the front wheel 18 nor the rear wheel 30 are included in the captured image.

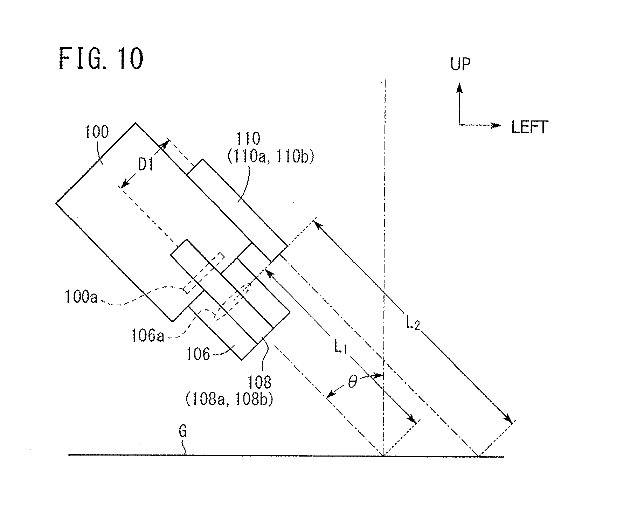

The bank angle calculation means 222 calculates the bank angle $\theta$ of the motorcycle 10 based on the reference distance $T_1$, the given distance $T_2$, the image reference distance $Y_1$ detected by the image reference distance detection means 216, and the image given distance $Y_2$ detected by the image given distance detection means 220. A description will now be given of a calculation method of the bank angle $\theta$ of the motorcycle 10 with reference to FIGS. 9 and 10. It should be noted that FIG. 9 shows the camera 100, the reference distance mark irradiation means 108, and the second mark irradiation means 110 as seen from the left of the motorcycle 10. FIG. 10 shows the camera 100, the reference distance mark irradiation means 108, and the second mark irradiation means 110 as seen from the front of the motorcycle 10.

First, the bank angle calculation means 222 calculates an actual distance of the field of view (hereinafter referred to as the actual field of view width) $W_1$ (measured in millimetres) based on the image reference distance $Y_1$ and an actual field of view width $W_2$ (measured in millimetres) based on the image given distance $Y_2$ shown in FIG. 9. More specifically, the bank angle calculation means 222 calculates the actual field of view widths $W_1$ and $W_2$ using Formulas (2) and (3) shown below.

[Formula 2]

$$W_1[mm] = (T_1[mm]/Y_1[pixel]) \times N[pixel] \qquad \cdots(2)$$

[Formula 3]

$$W_2[mm] = (T_2[mm]/Y_2[pixel]) \times N[pixel] \qquad \cdots(3)$$

The bank angle calculation means 222 calculates a distance $L_1$ (measured in millimetres) from a point q where the optical axis o of the camera 100 and the road surface G intersect to the centre of the lens 106a (see FIG. 9) based on the calculated actual field of view width $W_1$ using Formula (4) shown below. Further, the bank angle calculation means 222 calculates a distance $L_2$ (measured in millimetres) from the point q where the optical axis o of the camera 100 and the road surface G intersect to the centre of the lens 106a (see FIG. 9) based on the calculated actual field of view width $W_2$ using Formula (5) shown below. It should be noted that the longitudinal view angle of the camera 100 (longitudinal view angle) is represented by $\beta$.

[Formula 4]

$$L_1[mm] = (W_1[mm] \times 0.5)/tan(\beta \times 0.5) \qquad \cdots(4)$$

[Formula 5]

$$L_2[mm] = (W_2[mm] \times 0.5)/tan(\beta \times 0.5) \qquad \cdots(5)$$

The bank angle calculation means 222 calculates the bank angle θ shown in FIG. 10 using the calculated distances $L_1$ and $L_2$ and the offset distance D1 between the reference distance mark irradiation means 108 and the second mark irradiation means 110. More specifically, the bank angle calculation means 222 calculates the bank angle θ using Formula (6) shown below.

[Formula 6]

$$\theta = tan^{-1}\{(L_2[mm] - L_1[mm])/D1[mm]\} \qquad \cdots(6)$$

The vehicle speed v and the bank angle θ calculated by the vehicle speed calculator 200 are used, for example, for traction control and ABS control.

As described above, according to the above embodiment, the reference distance mark 109 is irradiated onto the road surface G in the field of view of the camera 100 in parallel with the optical axis o of the camera 100. The same mark 109 is formed in such a manner as to have the reference distance $T_1$ in the longitudinal direction. This allows projection of the mark, an indicator of the actual distance, into the captured image, thus making it possible to find the vehicle speed v with high accuracy even in the event of a change in vehicle height.

The two laser pointers 108a and 108b making up the reference distance mark irradiation means 108 irradiate the reference distance mark 109 in parallel with the optical axis o of the camera 100. The same pointers 108a and 108b are arranged spaced from each other in the longitudinal direction. This makes it possible to configure extremely accurately and simply the reference distance mark irradiation means 108 as a means to irradiate light in parallel with the optical axis o of the camera 100 so as to maintain the reference distance $T_1$. Further, the two laser pointers 108a and 108b are provided, one to the front and the other to the rear, relative to the optical axis o of the camera 100. This ensures ease in securing the large reference distance $T_1$, thus contributing to reduced impact of error on image recognition and providing improved calculation accuracy of the vehicle speed v. Still further, the two laser pointers 108a and 108b are arranged such that their axial lines are aligned with the optical axis o of the camera 100 in the longitudinal direction. This makes it unlikely that the reference distance $T_1$ will vary even during banking of the motorcycle 10, thus providing improved calculation accuracy of the vehicle speed v.

Further, the second mark 111 is irradiated onto the road surface G at a position offset (here to the left) relative to the reference distance mark 109 in the field of view. This makes it possible to find the bank angle θ of the motorcycle 10. The second mark 111 is formed in such a manner as to have the given distance $T_2$ in the longitudinal direction. The second mark irradiation means 110 irradiates the second mark 111 in parallel with the optical axis o of the camera 100. This makes it possible to find the bank angle θ of the motorcycle 10 with high accuracy.

The two laser pointers 110a and 110b making up the second mark irradiation means 110 irradiate the second mark 111 in parallel with the optical axis o of the camera 100 and are arranged so as to be longitudinally spaced from each other. This makes it possible to configure extremely accurately and simply the second mark irradiation means 110 as means to irradiate light in parallel with the optical axis o of the camera 100, in such a manner as to maintain the reference distance $T_2$. Further, the two laser pointers 110a and 110b are provided so that one is forward of and one is to the rear of the optical axis o of the camera 100. This ensures ease in securing the large given distance $T_2$, thus contributing to reduced impact of error on image recognition and providing improved calculation accuracy of the bank angle θ of the motorcycle 10. Still further, the two laser pointers 110a and 110b are arranged in such a manner that their axial lines are aligned in the longitudinal direction. This makes it unlikely that the given distance $T_2$ will vary even during banking of the motorcycle 10, thus providing improved calculation accuracy of the bank angle θ of motorcycle 10.

The reference distance mark irradiation means 108 and the second mark irradiation means 110 are attached to the camera 100. This ensures high parallelism of the optical axes of the laser pointers 108a, 108b, 110a and 110b with the optical axis o of the camera 100, thus providing improved calculation accuracy of the vehicle speed v.

The camera 100 is arranged below the engine 28a or the body frame 12. As a result, the second mark irradiation means 110 is arranged on one side of the camera 100, with the exhaust pipe 118 extending on the other side of the camera 100. This prevents an increase in the size of the motorcycle 10 as a result of the mounting of the imaging means, thus making it possible to bring the optical axis o of the camera 100 close to the lateral centreline c of the motorcycle 10.

It should be noted that although the present embodiment shows the second mark irradiation means 110 arranged so as to be offset by a distance D1 to the left of the reference distance mark irradiation means 108, the second mark irradiation means 110 may be arranged so as to be offset by a distance D1 to the right of the reference distance mark irradiation means 108. In this case, the optical axis o of the camera 100 can be brought close to the lateral centreline c of the motorcycle 10 by arranging the exhaust pipe 118 on the left side of the camera 100.

Although the camera 100 is shown as being arranged with its optical axis o offset to the left from the lateral centreline c, the camera 100 may be arranged so that the optical axis o is offset to the right from the lateral centreline c. Of course, it is preferred that the camera 100 should be provided such that the optical axis o is aligned with the lateral centreline c.

Although the laser pointers 110a and 110b are shown as being offset by a distance D1 to the left relative to the reference distance mark irradiation means 108, the laser pointers 110a and 110b may be offset, one to the left and the other to the right, by the distance D1.

Although the imaging means is provided below the engine 28a in the present embodiment, other arrangements are acceptable as long as the imaging means is provided below the body frame 12. On the other hand, although the description has been given in the context of a motorcycle 10, the vehicle may be a three- or four-wheeled vehicle as long as it is a rocking vehicle.

Instead of calculating the bank angle $\theta$ by using Formulas (2) to (6) given above, the bank angle calculation means 222 may calculate the bank angle $\theta$ by using the approach described below. In this case, the bank angle calculation means 222 detects an offset distance (distance along the vehicle width) $Y_3$ (measured in pixels) between the reference distance mark 109 irradiated by the reference distance mark irradiation means 108 and the second mark 111 irradiated by the second mark irradiation means 110 in the captured image (see FIG. 8). Then, the bank angle calculation means 222 finds the bank angle $\theta$ based on the ratio of the offset distance D1 to the reference distance $T_1(D1/T_1)$ and the ratio of the offset distance $Y_3$ to the image reference distance $Y_1(Y_3/Y_1)$.

Although the description has referred to engine 28a, it is acceptable for any prime mover to serve as a driving source of a rocking vehicle, and an electric motor may be used as a prime mover. In this case, the rotary shaft adapted to rotate integrally with the rotor of the electric motor serves as a main shaft.

A description has been given above of the present invention with reference to a preferred embodiment. However, the technical scope of the present invention as defined in the appended claims is not limited to the embodiment described above, and it will be apparent to those skilled in the art that various changes and modifications can be made to the embodiment. It will be apparent from the scope of the claims that the technical scope of the present invention as defined in the appended claims also includes embodiments with such changes or modifications. Further, the reference symbols in brackets appearing in the claims have been added for easy understanding of the present invention, and the present invention is not to be interpreted as being limited to the elements with the reference symbols.

## Claims

1. A motorcycle (10) including
   a prime mover (28a) serving as a driving source of the motorcycle (10) and having a main shaft (29),
   a front wheel (18) located forwardly of the prime mover (28a),
   a rear wheel (30) located rearwardly of the prime mover (28a),
   a pivot shaft (25) provided on the prime mover (28a) or on a vehicle body frame (12) connected to the prime mover (28a) at a position rearwardly of the main shaft (29), and
   a swing arm (32) that is supported by the pivot shaft (25) so as to be vertically swingable, the swing arm (32) pivotally supporting the rear wheel (30) at its rear portion,
   the motorcycle (10) further comprising:

   imaging means (100) adapted to capture images of a road surface;
   the imaging means (100) being arranged below the prime mover (28a) or the swing arm (32), forwardly of the pivot shaft (25), and rearwardly of the centre of the main shaft (29);
   the imaging means (100) being fastened to and supported by at least either a lower portion of the prime mover (28a) or a lower portion of the vehicle body frame (12) connected to the prime mover (28a).

2. The motorcycle (10) of claim 1, wherein
   the imaging means (100) is housed in an under cowl (62) adapted to cover a lower portion of the prime mover (28a), and

an opening (112) is formed in the under cowl (62) at a position appropriate to an optical axis of the imaging means (100).

3. The motorcycle (10) of claim 1 or claim 2, wherein
the imaging means (100) is set to have a view angle that ensures that no scene above the horizon is present in the captured images even when the motorcycle (10) banks fully.

4. The motorcycle (10) of any one of claims 1 to 3, wherein
the imaging means (100) is set to have a view angle that is large enough to include contact points of the rear wheel with the road at the time of maximum banking of the motorcycle (10) as seen from the front of the motorcycle (10).

5. The motorcycle (10) of claim 1, wherein
the prime mover (28a) is an engine adapted to rotate a crankshaft serving as the main shaft (29), and includes, below the crankshaft, an oil pan (104) formed so as to project downwardly of the crankshaft, and
the imaging means (100) is arranged in a concave portion (105) that is provided rearwardly of the oil pan (104).


**Patentansprüche**

1. Motorrad (10) umfassend
eine Antriebsmaschine (28a), die als eine Antriebsquelle des Motorrads (10) dient und eine Hauptwelle (29) aufweist,
ein Vorderrad (18), das sich vor der Antriebsmaschine (28a) befindet,
ein Hinterrad (30), das sich hinter der Antriebsmaschine (28a) befindet,
eine Rotationsachse (25), die an der Antriebsmaschine (28a) oder an einem Fahrzeugkarosserierahmen (12) zur Verfügung gestellt ist, der an der Antriebsmaschine (28a) an einer Position hinter der Hauptwelle (29) verbunden ist, und
eine Schwinge (32), die durch die Rotationsachse (25) so getragen wird, dass sie vertikal verschwenkt werden kann, wobei die Schwinge (32) das Hinterrad (30) an ihrem hinteren Abschnitt schwenkbar trägt,
wobei das Motorrad (10) des Weiteren umfasst:

Abbildungsmittel (100), die dazu eingerichtet sind, Bilder einer Straßenoberfläche aufzunehmen;
wobei die Abbildungsmittel (100) unter der Antriebsmaschine (28a) oder der Schwinge (32) vor der Rotationsachse (25) und hinter der Mitte der Hauptwelle (29) angeordnet sind;
wobei die Abbildungsmittel (100) an einem unteren Abschnitt der Antriebsmaschine (28a) oder einem unteren Abschnitt des Fahrzeugkarosserierahmens (12), der mit der Antriebsmaschine (28a) verbunden ist, befestigt sind und mindestens entweder von dem einen oder dem anderen getragen werden.

2. Motorrad (10) nach Anspruch 1, wobei
die Abbildungsmittel (100) in einer unteren Verkleidung (62) untergebracht sind, die dazu eingerichtet ist, einen unteren Abschnitt der Antriebsmaschine (28a) abzudecken, und
eine Öffnung (112) in der unteren Verkleidung (62) an einer Position ausgebildet ist, die für eine optische Achse der Abbildungsmittel (100) geeignet ist.

3. Motorrad (10) nach Anspruch 1 oder Anspruch 2, wobei
die Abbildungsmittel (100) dazu eingestellt sind, einen Sichtwinkel aufzuweisen, der sicherstellt, dass in den aufgenommenen Bildern selbst dann keine Landschaftsszene über dem Horizont vorhanden ist, wenn das Motorrad (10) volle Kurvenlage hat.

4. Motorrad (10) nach irgendeinem der Ansprüche 1 bis 3, wobei
die Abbildungsmittel (100) dazu eingestellt sind, einen Sichtwinkel zu haben, der weit genug ist, Kontaktpunkte des Hinterrads mit der Straße zur Zeit der vollen Kurvenlage des Motorrads (10), wie sie von der Vorderseite des Motorrads (10) aus gesehen werden, einzuschließen.

5. Motorrad (10) nach Anspruch 1, wobei
die Antriebsmaschine (28a) ein Motor ist, der dazu eingerichtet ist, eine Kurbelwelle zu drehen, die als Hauptwelle (29) dient, und, unter der Kurbelwelle, eine Ölwanne (104) aufweist, die so ausgebildet ist, dass sie von der Kurbelwelle aus nach unten hervorsteht, und
die Abbildungsmittel (100) in einem konkaven Abschnitt (105) angeordnet sind, der hinter der Ölwanne (104) zur Verfügung gestellt wird.

**Revendications**

1.  Motocycle (10), comprenant :

    un moteur premier (28a) servant de source d'entraînement du motocycle (10) et comportant un arbre principal (29),
    une roue avant (18) située à l'avant du moteur premier (28a),
    une roue arrière (30) située à l'arrière du moteur premier (28a),
    un arbre de pivot (25) prévu sur le moteur premier (28a) ou sur un cadre de carrosserie de véhicule (12), raccordé au moteur premier (28a) à une position à l'arrière de l'arbre principal (29), et
    un bras oscillant (32) qui est supporté par l'arbre de pivot (25) afin d'être verticalement oscillant, le bras oscillant (32) supportant de façon pivotante la roue arrière (30) dans sa partie arrière,
    le motocycle (10) comprenant en outre :

    un moyen d'imagerie (100) adapté pour capturer des images d'une surface de roulement ;
    le moyen d'imagerie (100) étant agencé sous le moteur premier (28a) ou le bras oscillant (32), à l'avant de l'arbre de pivot (25), et à l'arrière du centre de l'arbre principal (29) ;
    le moyen d'imagerie (100) étant fixé à et supporté par au moins une partie inférieure du moteur premier (28a) ou une partie inférieure du cadre de carrosserie de véhicule (12), raccordée au moteur premier (28a).

2.  Motocycle (10) selon la revendication 1, dans lequel le moyen d'imagerie (100) est logé dans un sous-carénage (62) adapté pour couvrir une partie inférieure du moteur premier (28a), et
    une ouverture (112) est formée dans le sous-carénage (62) à une position appropriée pour un axe optique du moyen d'imagerie (100).

3.  Motocycle (10) selon la revendication 1 ou la revendication 2, dans lequel
    le moyen d'imagerie (100) est réglé pour posséder un angle de vue qui garantit qu'aucune scène au-dessus de l'horizon n'est présente dans les images capturées même lorsque le motocycle (10) s'incline complètement.

4.  Motocycle (10) selon une quelconque des revendications 1 à 3, dans lequel
    le moyen d'imagerie (100) est réglé pour posséder un angle de vue suffisamment important pour inclure des points de contact de la roue arrière avec la route à l'instant d'inclinaison maximum du motocycle (10) en vue à partir de l'avant du motocycle (10).

5.  Motocycle (10) selon la revendication 1, dans lequel
    le moteur premier (28a) est un moteur adapté pour faire tourner un vilebrequin servant d'arbre principal (29), et
    comprend, sous le vilebrequin, un carter d'huile (104) formé afin de faire saillie vers le bas du vilebrequin, et
    le moyen d'imagerie (100) est agencé dans une partie concave (105) qui est prévue à l'arrière du carter d'huile (104).

FIG. 1

UP
FRONT ← → REAR
DOWN

EP 2 762 394 B1

FIG. 2

UP

RIGHT ← → LEFT

DOWN

54

56

56

52

20

20

58

58

16

16

34

34

38

38

18

30

G

FIG. 3

UP
FRONT

# FIG. 4

LEFT

FRONT

EP 2 762 394 B1

FIG. 5

FIG. 6

**FIG. 7**

FIG. 7

200

*202*
CONTROL SECTION

*210*
CAMERA
CONTROL MEANS

*100*
CAMERA

*214*
TRAVELED
DISTANCE
DETECTION MEANS

*218*
VEHICLE SPEED
CALCULATION
MEANS

*216*
IMAGE REFERENCE
DISTANCE
DETECTION MEANS

*110*
SECOND MARK
IRRADIATION
MEANS

*220*
IMAGE GIVEN
DISTANCE
DETECTION MEANS

*222*
BANK ANGLE
CALCULATION
MEANS

*108*
REFERENCE
DISTANCE MARK
IRRADIATION
MEANS

*212*
IRRADIATION
CONTROL MEANS

EP 2 762 394 B1

18

FIG. 8

RIGHT

FRONT

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007278951 A
- JP 2004306752 A
- JP 7098225 A
- JP 7132869 A